# EUROPÄISCHE PATENTANMELDUNG

(11) **EP 2 484 544 A1**
(43) Veröffentlichungstag der Anmeldung: **08.08.2012**
(21) Anmeldenummer: 12152368.2
(22) Anmeldetag: 25.01.2012
(51) Int. Cl.: B60H 1/00, F25B 30/02

(54) **Klimatisierungsvorrichtung für ein Elektrofahrzeug**

(30) Priorität: 03.02.2011 DE 102011010282
(71) Anmelder: STILL GmbH, 22113 Hamburg (DE)
(72) Erfinder: Howey, Ansgar, 22926 Ahrensburg (DE)
(74) Vertreter: Geirhos, Johann

(57) **Zusammenfassung**

Bei einer Klimatisierungsvorrichtung für einen Fahrgastraum (4) eines elektrisch angetriebenen Fahrzeugs, insbesondere für eine Fahrerkabine (3) eines Flurförderzeugs, mit einem mittels eines Kältemittels kühlbaren oder beheizbaren Innenwärmetauscher (13) für den Fahrgastraum (4), der über eine Kompressoreinrichtung (22) mit einem Außenwärmetauscher (15) verbunden ist, ist zwischen Innenwärmetauscher (13) und Außenwärmetauscher (15) eine in zwei Durchströmungsrichtungen wirkende Expansionsventilvorrichtung (29) angeordnet und kann die Kompressoreinrichtung (22) in beiden Durchströmungsrichtungen verdichten.

## Beschreibung

Die Erfindung betrifft eine Klimatisierungsvorrichtung für ein Elektrofahrzeug. Dabei betrifft die Erfindung eine Klimatisierungsvorrichtung für einen Fahrgastraum eines elektrisch angetriebenen Fahrzeugs, insbesondere für eine Fahrerkabine eines Flurförderzeugs, mit einem mittels eines Kältemittels kühlbaren oder beheizbaren Innenwärmetauscher für den Fahrgastraum, der über eine Kompressoreinrichtung mit einem Außenwärmetauscher verbunden ist.

Viele mobile Arbeitsmaschinen, insbesondere Flurförderzeuge, weisen eine Fahrerkabine auf, um den die mobile Arbeitsmaschine bedienenden Fahrer vor Witterungseinflüssen, insbesondere Hitze und Kälte, zu schützen. Bei Flurförderzeugen wird oft die Fahrerkabine klimatisiert, indem diese sowohl beheizt, wie auch gekühlt werden kann. Dadurch können die Arbeitsbedingungen des Fahrers verbessert werden, wenn das Flurförderzeug z.B. in einem Freigelände ganzjährig eingesetzt wird.

Bekannt ist dabei, bei durch einen flüssigkeitsgekühlten Verbrennungsmotor angetriebenen mobilen Arbeitsmaschinen einen Wärmetauscher in der Fahrerkabine bzw. in einem Belüftungssystem für die Fahrerkabine anzuordnen, durch den die erwärmte Kühlflüssigkeit geleitet wird und über den die Fahrerkabine beheizt werden kann.

Weiter ist bekannt, bei mobilen Arbeitsmaschinen und Flurförderzeugen eine Klimaanlage zur Kühlung vorzusehen, die mit einem weiteren Wärmetauscher, der in der Fahrerkabine bzw. in einem Belüftungssystem für die Fahrerkabine angeordnet ist, die Luft kühlen kann. Diese Klimaanlagen können dabei als Zusatzausstattung ausgebildet sein, die einen an der Rückseite oder dem Dach der Fahrerkabine angeordneten Rückkühler bzw. Kondensator im Freien aufweist und die auch als kompaktes Zusatzgerät ausgebildet sein können. Dabei kommen Klimaanlagen zum Einsatz, in denen ein gasförmiges Kältemittel durch einen Kompressor verdichtet wird und das heiße verdichtete Gas in einem Kondensator gekühlt wird, bis es kondensiert. Das unter Druck stehende flüssige Kältemittel wird dem Wärmetauscher über ein Expansionsventil zugeleitet. In dem Expansionsventil fällt der Druck des Kältemittels rasch ab und das Kältemittel verdampft, wobei die Temperatur stark abfällt und der Wärmetauscher eine Kühlleistung erbringt.

Nachteilig an diesem Stand der Technik ist, dass zum einen zwei Wärmetauscher, einer zum Heizen und einer zum Kühlen erforderlich sind, und zum anderen diese Art des Heizens einen Antrieb der mobilen Arbeitsmaschine durch einen Verbrennungsmotor voraussetzt.

Möglich ist auch, bei einer Klimatisierungsvorrichtung für eine Fahrerkabine eines Flurförderzeugs einen mittels eines Kältemittels kühlbaren Innenwärmetauscher für die Fahrerkabine vorzusehen, der mittels des Kältemittels auch erwärmt werden kann, um den Fahrgastraum zu beheizen. Dies erfolgt, indem zwei Kreisläufe jeweils mit eigenem Expansionsventil vorgesehen werden, in die der Innenwärmetauscher und der Außenwärmetauscher integriert sind.

Nachteilig an diesem Stand der Technik ist, dass dies einen doppelten Aufwand an Leitungen bedeutet. Auch muss der Innenwärmetauscher wie auch der Außenwärmetauscher so ausgeführt sein, dass die Kreisläufe getrennt sind und dies bedeutet eine kostenaufwändige Sonderausführung der Wärmetauscher.

Der vorliegenden Erfindung liegt die Aufgabe zugrunde, eine Klimatisierungsvorrichtung für einen Fahrgastraum eines Elektrofahrzeuges, insbesondere eine Fahrerkabine eines elektrisch angetriebenen Flurförderzeugs, zur Verfügung zu stellen, die einfach und kostengünstig aufgebaut ist.

Diese Aufgabe wird durch eine Klimatisierungsvorrichtung für einen Fahrgastraum eines elektrisch angetriebenen Fahrzeugs mit den Merkmalen des unabhängigen Anspruchs 1 gelöst. Vorteilhafte Weiterbildungen werden in den Unteransprüchen angegeben.

Die Aufgabe wird erfindungsgemäß dadurch gelöst, dass eine Klimatisierungsvorrichtung für einen Fahrgastraum eines elektrisch angetriebenen Fahrzeugs, insbesondere für eine Fahrerkabine eines Flurförderzeugs, mit einem mittels eines Kältemittels kühlbaren oder beheizbaren Innenwärmetauscher für den Fahrgastraum versehen ist, der über eine Kompressoreinrichtung mit einem Außenwärmetauscher verbunden ist. Zwischen Innenwärmetauscher und Außenwärmetauscher ist eine in zwei Durchströmungsrichtungen wirkende Expansionsventilvorrichtung angeordnet und die Kompressoreinrichtung kann wahlweise in beiden Durchströmungsrichtungen verdichten.

Vorteilhaft wird durch die erfindungsgemäße Klimatisierungsvorrichtung Bauraum eingespart, da keine zwei Innenwärmetauscher erforderlich sind. Es kann mit einem einzigen Innenwärmetauscher die Fahrerkabine sowohl gekühlt werden, wie auch beheizt werden. Wenn ein thermodynamischer Kreisprozess mithilfe des Kältemittels beim Heizbetrieb durchlaufen wird und der Umgebung Wärme entnommen wird, arbeitet die Klimatisierungsvorrichtung als Wärmepumpe und entnimmt einen Großteil der Heizwärme der Umgebung. Hierfür muss dann keine Ladung der Batterie bei einem batterie-elektrisch betriebenen Elektrofahrzeug, oder auch aufwendig z.B. per Brennstoffzelle erzeugte elektrische Energie, aufgewandt werden. Auch wird durch die Umkehrung der Durchströmrichtung des Kältemittels in derselben Leitung vermieden, dass eine zweite Kältemittelleitung vorgesehen werden muss. Vorteilhaft kann als Innenwärmetauscher ein handelsüblicher Wärmetauscher für Kältemittel eingesetzt werden, da für die beiden Betriebsarten Heizen und Kühlen keine voneinander getrennten Bereiche in dem Innenwärmetauscher für zwei Kältemittelkreise vorgesehen werden müssen. Es wird Bauraum und Bauaufwand eingespart. Wenn die erfindungsgemäße Klimatisierungsvorrichtung als Heizung arbeitet, wirkt diese als Wärmepumpe. Dies spart erheblich Heizenergie ein, da ein Großteil der Heizwärme letztlich der Umgebung über den von Umgebungsluft durchströmten Außenwärmetauscher entnommen wird. Es kann vor allem bei batterie-elektrischen Flurförderzeugen vorteilhaft ein Mehrfaches der eingesetzten elektrischen Antriebsenergie des Kompressors als Heizleistung erreicht werden und nur ein geringer Teil der Heizleistung muss der Batterie entnommen werden. Gerade bei einem batterie-elektrisch betriebenen Elektrofahrzeug, das aufgrund seiner Einsatzbedingungen etwa in einem Kühlhaus im Fahrgastraum stark und oft geheizt werden muss, ergibt sich dadurch eine erhebliche Energieeinsparung und Verlängerung des Aktionsradius mit einer Batterieladung.

In günstiger Ausführungsform besteht die Kompressoreinrichtung aus einem Kältemittelkompressor mit einem vorgeschalteten 4/2 Wegeventil, durch das eine Saugseite und eine Druckseite des Kältemittelkompressors getauscht werden können.

Dies ermöglicht eine Umkehr der Durchströmrichtung des Kältemittels und damit ein Umschalten von Heizen zu Kühlen bzw. umgekehrt, indem die Zuordnung der Anschlüsse für Saugseite und Druckseite des Kompressors zu den Leitungen zu Innenwärmetauscher und Außenwärmetauscher vertauscht wird. Das 4/2 Wegeventil schaltet die Leitungen entweder parallel oder über kreuz. Durch diese Ausführungsform ist es möglich, einen handelsüblichen kostengünstigen Klimakompressor einzusetzen, z.B. einen Scrollverdichter, dessen Arbeitsrichtung nicht umgekehrt werden kann.

In einer günstigen Ausführungsform der Erfindung besteht die Expansionsventilvorrichtung aus zwei in Reihe angeordneten Expansionsventilen mit gegeneinander orientierter Durchströmrichtung, wobei jedes Expansionsventil in Gegendurchströmrichtung durch eine Umgehungsleitung mit einem in dieser Richtung öffnenden Rückschlagventil umgangen wird.

Dies ermöglicht den Einsatz kostengünstiger und handelsüblicher Expansionsventile, die bei für das jeweilige Expansionsventil gegen die Arbeitsrichtung orientierter Durchströmung durch die jeweilige Umgehungsleitung und das öffnende Rückschlagventil umgangen und kurzgeschlossen werden. In der in Arbeitsrichtung orientierten Durchströmrichtung schließt das Rückschlagventil und das Expansionsventil arbeitet wie bei einer bekannten Klimaanlage. Alternativ kann auch ein in zwei Durchströmrichtungen arbeitendes Expansionsventil ohne Umgehungsleitungen eingesetzt werden.

Vorteilhaft weist der Außenwärmetauscher einen Lüfter auf, wodurch eine effiziente Wärmeabfuhr bzw. -zufuhr an die Umgebungsluft erreichbar ist.

Vorteilhaft weist der Innenwärmetauscher einen Lüfter auf, wodurch eine effiziente Wärmeabfuhr bzw. -zufuhr in den Fahrgastraum erreichbar ist.

Die Kompressoreinrichtung kann ein durch einen Elektromotor angetriebener Kompressor sein, dessen Druck- und Saugseite durch Umpolen bzw. Umkehren der Drehrichtung eines Drehfeldes vertauscht werden können, indem die Drehrichtung des Kompressors umgekehrt wird.

Die Aufgabe wird auch durch ein elektrisch angetriebenes Fahrzeug, insbesondere ein Flurförderzeug, mit einer Klimatisierungsvorrichtung wie sie zuvor beschrieben wurde gelöst.

Das elektrisch angetriebene Fahrzeug, insbesondere ein batterie-elektrisch betriebenes Fahrzeug, weist die zuvor bereits genannten Vorteile auf.

Weitere Vorteile und Einzelheiten der Erfindung werden anhand des in den Figuren dargestellten Ausführungsbeispiels näher erläutert. Hierbei zeigt die
- Fig. 1: ein erfindungsgemäßes Flurförderzeug mit Klimatisierungsvorrichtung und
- Fig. 2: ein Schaltbild einer erfindungsgemäßen Klimatisierungsvorrichtung.

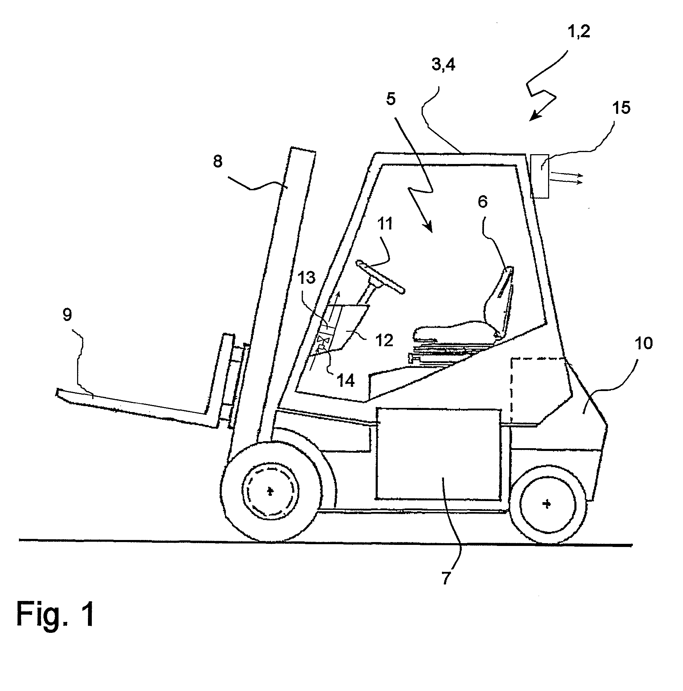

Die Fig. 1 zeigt ein erfindungsgemäßes elektrisch angetriebenes, insbesondere batterie-elektrisch beriebenes, Fahrzeug 1, das als Flurförderzeug, hier als Gegengewichtsgabelstapler 2, ausgebildet ist, mit einer Fahrerkabine 3 als Fahrgastraum 4, in dem sich ein Fahrerarbeitsplatz 5 mit einem Fahrersitz 6 befindet. Der Gegengewichtsgabelstapler 2 weist als elektrisch angetriebenes Fahrzeug 1, das über nicht dargestellte Elektromotoren angetrieben wird, zur Energieversorgung eine Batterie 7 auf. An einem Hubmast 8 ist eine Lastgabel 9 zur Aufnahme einer Last angeordnet, wobei das Gewicht dieser Last durch ein Gegengewicht 10 ausgeglichen wird. Der Fahrerarbeitsplatz 5 weist ein Lenkrad 11 auf und vor dem Lenkrad 11 in einem Armaturenbrett 12 ist ein Innenwärmetauscher 13 mit einem Lüfter 14 angeordnet, mit dem die Luft in der Fahrerkabine 3 beheizt oder gekühlt werden kann, indem der Innenwärmetauscher 13 von dem Lüfter 14 mit Luft durchströmt wird, wie durch die Pfeile angedeutet. Ein Außenwärmetauscher 15 ist an der Dachrückseite der Fahrerkabine 3 angeordnet und wird von Umgebungsluft, beispielsweise mittels eines weiteren nicht dargestellten Lüfters, durchströmt, wie durch Pfeile angedeutet ist.

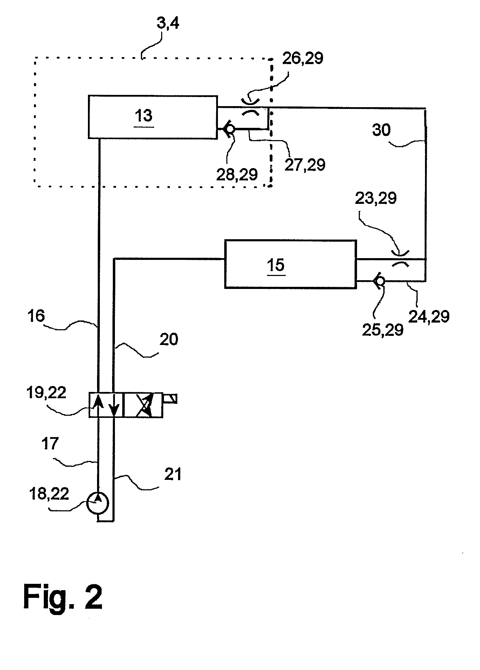

Die Fig. 2 zeigt ein Schaltbild der Klimatisierungsvorrichtung, die in dem Flurförderzeug 1 der Fig. 1 eingebaut ist, schematisch im Heizbetrieb. In der Fahrerkabine 3 bzw. dem Fahrgastraum 4 befindet sich der Innenwärmetauscher 13. Eine erste Kältemittelleitung 16 verbindet über ein 4/2 Wegeventil 19 die Druckseite 17 eines Kompressors 18 mit dem Innenwärmetauscher 13. Eine zweite Kältemittelleitung 20 verbindet eine Saugseite 21 des Kompressors 18 über das 4/2 Wegeventil 19 mit dem Außenwärmetauscher 15. Das 4/2 Wegeventil 19 und der Kompressor 18 bilden eine Kompressoreinrichtung 22. Ein Außenexpansionsventil 23 mit einer Außenumgehungsleitung 24, in der ein Außenrückschlagventil 25 angeordnet ist, bildet zusammen mit einem Innenexpansionsventil 26 mit einer Innenumgehungsleitung 27, in der ein Innenrückschlagventil 28 angeordnet ist, eine Expansionsventilvorrichtung 29. Innenwärmetauscher 13 und Außenwärmetauscher 15 sind über eine Verbindungsleitung 30 verbunden.

In der dargestellten Schaltstellung des 4/2 Wegeventil 19 erfolgt ein Heizbetrieb für die Fahrerkabine 3. Das gasförmige Kältemittel wird von dem Kompressor 18 gegen die Drosselung des Außenexpansionsventil 23 verdichtet und von der Druckseite 17 des Kompressors 18 über das 4/2 Wegeventil 19 und die erste Kältemittelleitung 16 dem Innenwärmetauscher 13 in der Fahrerkabine 3 zugeführt. Durch die Verdichtung erwärmt sich das Gas und gibt in dem Innenwärmetauscher 13 seine Wärmeenergie als Heizleistung ab, wobei die Luft mittels des Lüfters 14 in der Fig. 1 durch den Innenwärmetauscher 13 geleitet wird. Das Kältemittel kondensiert in dem Innenwärmetauscher 13 und wird über die Innenumgehungsleitung 27, das Innenrückschlagventil 28 und die Verbindungsleitung 30 dem Außenexpansionsventil 23 zugeführt, in dem der Druck des Kältemittels soweit abfällt, dass das Kältemittel in dem nachfolgenden Außenwärmetauscher 15 verdampft. Dabei wird das Kältemittel von der Umgebungsluft erwärmt und entnimmt dieser Wärmeenergie. Über die zweite Kältemittelleitung 20 und das 4/2 Wegeventil 19 wird das Kältemittel wieder der Saugseite 21 des Kompressors 18 zugeführt.

In der anderen Schaltstellung des 4/2 Wegeventil 19 erfolgt ein Kühlbetrieb für die Fahrerkabine 3. Das gasförmige Kältemittel wird dann von dem Kompressor 18 gegen die Drosselung des Innenexpansionsventil 26 verdichtet und von der Druckseite 17 des Kompressors 18 über das 4/2 Wegeventil 19 über kreuz in die zweite Kältemittelleitung 20 und dann dem Außenwärmetauscher 15 zugeführt. Das Kältemittel kondensiert in dem Außenwärmetauscher 15 und wird über die Innenumgehungsleitung 27, das Außenrückschlagventil 25 und die Verbindungsleitung 30 dem Innenexpansionsventil 26 zugeführt, in dem der Druck des Kältemittels soweit abfällt, dass das Kältemittel in dem nachfolgenden Innenwärmetauscher 13 verdampft und die Luft der Fahrerkabine 23 kühlt. Über die erste Kältemittelleitung 16 und das 4/2 Wegeventil 19 wird das Kältemittel wieder der Saugseite 21 des Kompressors 18 zugeführt. Es kann allein durch das 4/2 Wegeventil 19 bestimmt werden, ob ein Heizbetrieb oder ein Kühlbetrieb stattfinden soll.

Bei der erfindungemäßen Klimatisierungsvorrichtung, die im Heizbetrieb als Wärmepumpe arbeiten kann, muss nur ein Teil, z.B. ca. ein Fünftel, der Heizenergie durch die Kompressionsleistung des Kompressors 18 und somit aus der Fahrzeugbatterie aufgebracht werden.

Besonders Vorteilhaft ist es, die erfindungsgemäße Klimatisierungsvorrichtung bei einem batterie-elektrisch angetriebenen Fahrzeug einzusetzen, da im Heizbetrieb deutlich weniger Strom verbraucht wird, als bei einer strombetriebenen Zusatzheizung. Es ist jedoch auch möglich, die erfindungsgemäße Klimatisierungsvorrichtung bei einem Fahrzeug einzusetzen, das nicht von elektrischen Antriebsmotoren angetrieben wird und keine Batterie für den Fahrantrieb aufweist, wie zum Beispiel bei einem rein von einem Verbrennungsmotor angetriebenen Fahrzeug.

## Patentansprüche

1. Klimatisierungsvorrichtung für einen Fahrgastraum (4) eines elektrisch angetriebenen Fahrzeugs, insbesondere für eine Fahrerkabine (3) eines Flurförderzeugs, mit einem mittels eines Kältemittels kühlbaren oder beheizbaren Innenwärmetauscher (13) für den Fahrgastraum (4), der über eine Kompressoreinrichtung (22) mit einem Außenwärmetauscher (15) verbunden ist
**dadurch gekennzeichnet,**
**dass** zwischen Innenwärmetauscher (13) und Außenwärmetauscher (15) eine in zwei Durchströmungsrichtungen wirkende Expansionsventilvorrichtung (29) angeordnet ist und die Kompressoreinrichtung (22) in beiden Durchströmungsrichtungen verdichten kann.

2. Klimatisierungsvorrichtung nach Anspruch 1,
**dadurch gekennzeichnet,**
**dass** die Kompressoreinrichtung (22) aus einem Kältemittelkompressor (18) mit einem vorgeschalteten 4/2 Wegeventil (19) besteht, durch das Saugseite (17) und Druckseite (21) des Kältemittelkompressors (18) getauscht werden können.

3. Klimatisierungsvorrichtung nach Anspruch 1 oder 2,
**dadurch gekennzeichnet,**
**dass** die Expansionsventilvorrichtung (29) aus zwei in Reihe angeordneten Expansionsventilen (23,26) mit gegeneinander orientierter Durchströmrichtung besteht, wobei jedes Expansionsventil (23,26) in Gegendurchstömrichtung durch eine Umgehungsleitung (24,27) mit einem in dieser Richtung öffnenden Rückschlagventil (25,28) umgangen wird.

4. Klimatisierungsvorrichtung nach einem der Ansprüche 1 bis 3,
**dadurch gekennzeichnet,**
**dass** der Außenwärmetauscher (15) einen Lüfter aufweist.

5. Klimatisierungsvorrichtung nach einem der Ansprüche 1 bis 4,
**dadurch gekennzeichnet,**
**dass** der Innenwärmetauscher (13) einen Lüfter (14) aufweist.

6. Klimatisierungsvorrichtung nach den Ansprüchen 3 bis 5,
**dadurch gekennzeichnet,**
**dass** die Kompressoreinrichtung (22) ein durch einen Elektromotor angetriebener Kompressor ist, dessen Druck- und Saugseite durch Umpolen bzw. Umkehren der Drehrichtung eines Drehfeldes vertauscht werden können.

7. Elektrisch angetriebenes Fahrzeug, insbesondere Flurförderzeug, mit einer Klimatisierungsvorrichtung nach einem der vorhergehenden Ansprüche.
